# EUROPEAN PATENT SPECIFICATION

(11) **EP 2 368 057 B1**
(45) Date of publication and mention of the grant of the patent: **03.09.2014**
(21) Application number: 08876147.3
(22) Date of filing: 24.12.2008
(51) Int. Cl.: F16D 65/097

(54) **WIRE SPRING FOR DISC BRAKE CALIPER**
DRAHTFEDER FÜR SCHEIBENBREMSSATTEL
RESSORT EN FIL POUR ÉTRIER DE FREIN À DISQUE

(43) Date of publication of application: 28.09.2011
(73) Proprietor: Freni Brembo S.p.A., 24035 Curno (Bergamo) (IT)
(72) Inventor: CRIPPA, Cristian, I-24031 Almenno San Bartolomeo, Bergamo (IT); CESANI, Paolo, I-24122 Bergamo (IT)
(74) Representative: Mitola, Marco
(86) International application number: PCT/IT2008/000796
(87) International publication number: WO 2010/073277

(56) References cited:
- EP-A- 1 148 265
- DE-A1- 1 600 081

## Description

The present invention relates to a wire spring for a disc brake caliper acting on the brake pads.

As is known, the pads of the disc brake calipers tend to vibrate emitting unpleasant squeaking when braking.

Furthermore, at the beginning of the braking phase, the pads are pulled by the brake disc against the reaction shoulder facing from the side of the drive direction. In this way unpleasant noise is generated caused by the contact of the pads that butt against the reaction shoulders of the caliper body.

The prior art solutions foresee the use springs to position the pads in their related housing within the caliper body.

These solutions are unable to effectively dampen the vibrations and they cannot prevent noise caused by the contact of the pads pulled by the disc brake against the related reaction shoulders of the caliper body.

Such disadvantages are solved by a wire spring known from EP 1 148 265 A1, see e.g., figures 11-17, in accordance with the preamble of claim 1 of the present invention which, cf. characterising portion of claim 1 of the present invention, in addition, allows to more securely connect the wire spring to the pads.

Other embodiments of the wire spring according to the invention are described in the subsequent claims.

Further advantages of the present invention will appear more clearly from the following description of preferred non-limiting embodiments thereof, wherein:
figure 1 shows a prospective view of a wire spring according to an embodiment of the present invention;
figure 2 shows a prospective view of a disc brake caliper comprising the wire spring of figure 1;
figure 3 shows a view of a disc brake caliper comprising the wire sprang of figure 1 in a further assembly configuration;

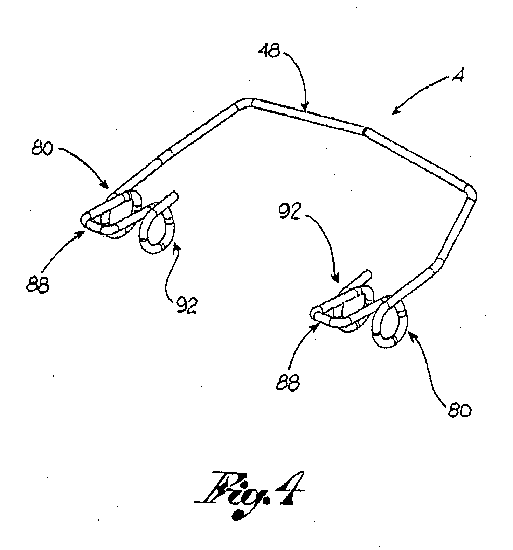

figure 4 shows a prospective view of a wire spring according to a further embodiment of the present invention;
figure 5 shows a prospective view of a disc brake caliper comprising the wire spring of figure 4.

With reference to the above Figures, reference 4 generically identifiers a wire spring made with a suitable shaped metal wire able to he inserted inside a caliper body 8 of a disc brake caliper 12, to elastically influence a first and a second pad 16,20.

Preferably, the said metal wire of the spring 4 is a wire with a circular section.

In a assembly configuration, the wire spring 4 straddles the related disc brake (not illustrated) and in particular straddles a pads housing 24 contained by the caliper body 8.

The caliper body 8 comprises further, in correspondence with contrasting lateral ends 28, reaction shoulders 32 suitable to receive the stroke of pads 16,20 pulled by the 4 brake disc during the braking phase.

According to the invention, the wire spring comprises a first elastic branch 40 suitable to elastically influence the first pad 16 arranged in correspondence with a first brake band of a related disc brake. The first elastic branch elastically influences the first pad 16 against a first reaction shoulder 32' of the caliper body 8 positioned in correspondence with a lateral extremity 28 of the caliper body 8.

The wire spring 4 comprises a second elastic branch 44 suitable to elastically influence a second pad 20 positioned in correspondance with a second brake band, opposed to the first face in an axial direction X-X parallel to the rotation axis of the related disc brake.

The second elastic branch 44 elastically influences the second pad 20 striking against the second reaction shoulder 32" of the caliper body 8, positioned in correspondence with the same lateral extremity 28 of the caliper body 8.

The wire spring 4 further comprises a connection arm 48 between the first and the second elastic branches 40, 44. The connection arm 48 interfaces with the caliper body 8 to create a support and/or a coupling of the wire spring 4 on the caliper body 8.

Advantageously, the wire spring 4 comprises at least one coupling section to the caliper body 52 suitable to constrain the spring 4 to the caliper body 8, clasping a portion of the caliper body 8, by means of a coupling with clearance.

According to an embodiment, the connection arm 48 comprises the coupling section to the caliper body 52, positioned in correspondence with the centreline of the wire spring 4.

According to an embodiment, the wire spring 4 comprises at least a second coupling section to the caliper body70 suitable to constrain the spring 4 to the caliper body 8, clamping a portion of the caliper body **8,** preferably by means of a snap connection.

According to the invention, each elastic branch 40,44 comprises a fixing section to the pads 72 so as to constrain the said elastic branches 40,44 to the caliper body 8.

According to the invention, the coupling section to the caliper body 52 comprises at least one eyelet 80 suitable to clasp a guide and support pin 84 of the pads 16,20 by means of a coupling with clearance.

For example, the eyelet 80 is made by coiling in a ring a section of each elastic branch 40,44.

Preferably, the said eyelet, 80 connects each elastic branch 40, 44 to the connection arm 48 so as to create a lever that elastically connects the connection arm 48, associated to the caliper body 8, with the pads 16,20, through the elastic branches 40,44; thereby the eyelets 80 form the fulcrum of the said lever hinged on the pin 84.

According to the invention, the fixing section to the pads 72 comprises a 'U' shaped section 88, positioned projecting in relation to the eyelet 80 and suitable to connect to a lateral edge 68 of the pad 16,20.

According to a further embodiment (figures 8-9) the 'U' folded section 88 comprises an additional eyelet 80 so as to create for each of the elastic branches 40,44 two coupling points to the pin of the pad 84 and to delimit, between the two eyelets 80, 92, a housing to house the lateral edge of the pad 68.

According to an embodiment, the caliper 12 comprises at least one pad positioning spring 108, positioned for example above the pads 16, 20, in which the positioning spring 108 is constrained to at least one guide and support pin 84 and creates a support for the connection arm 48 of the said wire spring 4.

According to a further embodiment of the present invention, the wire spring 4 is connected by means of the eyelets 80 to the guide and support pins 84, and the connection arm 48 of the elastic branches 40,44 is placed against a lateral bridge 112 of the caliper body 8 in correspondence with a lateral extremity 28.

The function of the wire spring in accordance with the present invention will now he described.

In particular, the wire spring 4 preload the pads 16,20 pushing them against the reaction shoulder 32 of the caliper body 8. Preferably, the springs 4 are assembled in the caliper body 8 so as to push the pads 16,20 against the reaction shoulder 32 that normally receive the pads 16,20 during the braking phase of the vehicle in forward gear.

In this way the pads are already up against the related reaction shoulders 32 in all brakes of the vehicle in forward gear and therefore there is no collision between the pads and the reaction shoulders.

Furthermore, during braking in reverse gear, the pads are pulled against the opposite reaction shoulder in relation tc the forward gear direction, acquiring the elastic force cf the spring 4; in any case, the thrust applied by the branches 40,44 softens the collision between the lateral edges 68 of the pads 16,20 and the reaction shoulders preventing the outburst of unpleasant noises.

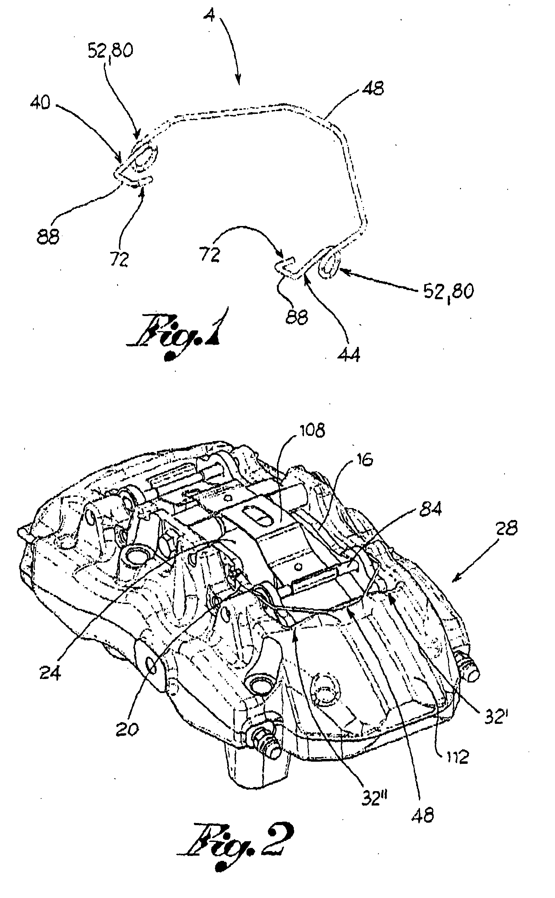

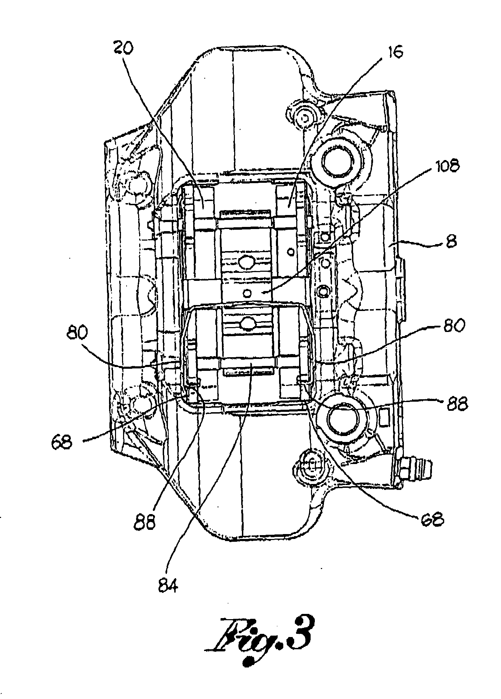

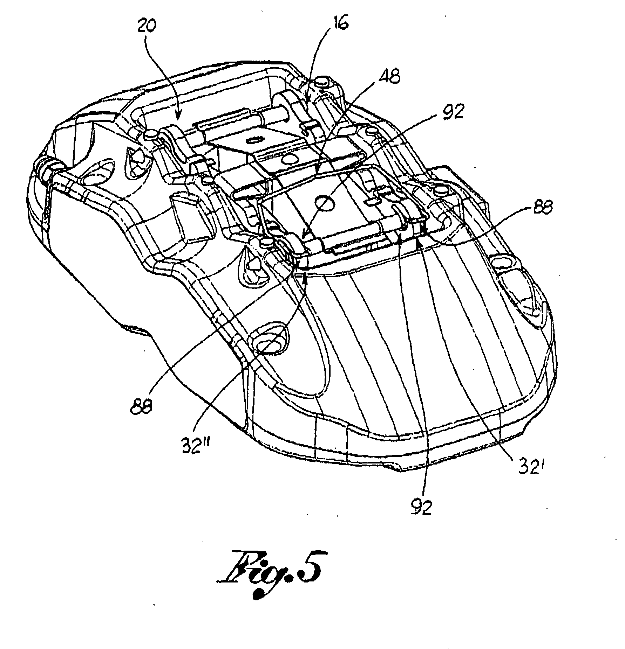

The wire springs 4, based on the type and the assembly method, can work substantially exerting an elastic lever (figures 2,3,5).

Advantageously the circular section of the wire of the spring 4 optimises the torsion behaviour of the spring itself in particular in the joint between the elastic branches 40,44 and the connection arms 48.

As can be understood from the description, the wire spring of the present invention allows overcoming the disadvantages of the prior art.

In particular, the pads are elastically preloaded against the reaction shoulders so as to avoid sharp impacts against them.

Preferably, the pads are preloaoed so as to abut against the reaction shoulders from the part of the forward gear direction.

In this way during the forward gear braking, which represents nearly the entirely of a vehicle's braking, the pads are already abutted against the related reaction shoulder and no sharp and noisy impacts occur at the beginning of the braking phase.

Furthermore, during reverse gear braking, thanks to the preloading of the springs, the pad is guided and slowed before abutting against the related reaction shoulder positioned towards the reverse gear direction. In this way there is no violent impact of the pad against the shoulder and no unpleasant noises are produced.

Furthermore, the wire springs of the present invention limit and dampen the vibrations of the pads because they keep the pads against the reaction shoulders.

A man skilled in the art may make several changes and adjustments to the springs described above in order to meet specific and incidental needs, all failing within the scope of protection defined in the following claims.

## Claims

1. A wire spring (4) for disc brake caliper (12), suitable to be inserted inside a caliper body (8) of a disc brake calipar (12), the spring (4) provided to be positioned astride the related disc brake and being made by means of a suitable shaped metal wire, the spring (4) comprises
- a first elastic branch (40) suitable to elastically influence a first pad (16) positioned in correspondence with a first face of a brake band of a related disc brake, the first elastic branch (40) elastically influencing the first pad (16) abutted against a first reaction shoulder (32') of the caliper body (8) positioned in correspondence with a lateral extremity (23) of the caliper body (8),
- a second elastic branch (44) suitable to elastically influence a second pad (20) positioned in correspondance with a second face of the brake band, opposite the first face in an axial direction (X-X) parallel to the rotation axis of the related disc brake, the second elastic branch (44) elastically influencing the second pad (20) abutting a second reaction shoulder (32") of the caliper body (8), positioned in correspondence with the same lateral extremity (28) of the caliper body (8),
- a connection arm (48) between the first and the second elastic branch (40,44), the connection arm (48) interfacing with the caliper body (8) creating a support and/or a coupling of the spring (4) on the caliper body (8) wherein
- said wire spring (4) comprises at least one coupling section to the caliper body (52) suitable to constrain the spring (49 to the caliper body (8), clasping a section of the caliper body (8), by means of a coupling with clearance,
- each of the elastic branches (40,44) comprises a fixing section to the pads (72) so as to constrain the said branch (40,44) to the related pad (16,20)
- wherein the coupling section to the caliper body (52) comprises at least one eyelet (80) suitable to clasp a guide and support pin (84) of the pads (16,20) by means of a coupling with clearance,
**characterised in that**
- the fixing section to the pads (72) comprises a U-shaped section (88), projecting in relation to the eyelet (80) and suitable to connect to a lateral edge (68) of the pads (16,20).

2. Wire spring (4) according to claim 1, wherein the said 'U' shaped section comprises a further eyelet (92) aligned with the first eyelet (80) so as to create for each of the elastic branches (40,44) two connection points to the pin (84) and to define, between the two eyelets (80,92), a housing to house a lateral edge (68) of the pad (16,20).

3. Wire spring (4) according to claim 1 or 2, wherein the said eyelet (80) is made by coiling in a ring a section of each elastic branch (40,44).

4. Wire spring (4) according to claim 1, 2 or 3, wherein the said eyelet (80) connects each elastic branch (40,44) to the connection arm (48) so as to create a lever that elastically connects the connection arm (48), connected to the caliper body (8), with the pads (16,20), through the elastic branches (40,44), the eyelet (80) creating the fulcrum of the said lever.

## Patentansprüche

1. Drahtfeder (4) für einen Scheibenbremssattel (12), die zum Einsetzen in einen Sattelkörper (8) eines Scheibenbremssattels (12) geeignet ist, wobei die Feder (4) vorgesehen ist, um quer über die betreffende Scheibenbremse hinweg positioniert zu werden, und die mittels eines geeignet geformten Metalldrahts hergestellt ist, wobei die Feder (4) aufweist:
- einen ersten elastischen Ast (40), der dazu geeignet ist, einen ersten Bremsklotz (16) elastisch zu beeinflussen, der entsprechend einer ersten Seite eines Bremsbands einer betreffenden Scheibenbremse angeordnet ist, wobei der erste elastische Ast (40) den ersten Bremsklotz (16) elastisch beeinflusst, der gegen eine erste Reaktionsschulter (32') des Sattelkörpers (8) abgestützt ist, die entsprechend einem seitlichen Ende (28) des Sattelkörpers (8) angeordnet ist,
- einen zweiten elastischen Ast (44), der dazu geeignet ist, einen zweiten Bremsklotz (20) elastisch zu beeinflussen, der entsprechend einer zweiten Seite des Bremsbands angeordnet ist, entgegengesetzt der ersten Seite in axialer Richtung (X-X) parallel zur Drehachse der betreffenden Scheibenbremse, wobei der zweite elastische Ast (44) den zweiten Bremsklotz (20) elastisch beeinflusst, der sich gegen eine zweite Reaktionsschulter (32") des Sattelkörpers (8) abstützt, die entsprechend dem gleichen seitlichen Ende (28) des Sattelkörpers (8) angeordnet ist,
- einen Verbindungsarm (48) zwischen dem ersten und dem zweiten elastischen Ast (40, 44), wobei der Verbindungsarm (48) mit dem Sattelkörper (8) in Eingriff steht, um eine Stütze und/oder Kupplung der Feder (4) an dem Sattelkörper (8) zu erzeugen, wobei
- die Drahtfeder (4) zumindest einen Kupplungsabschnitt zu dem Sattelkörper (52) aufweist, der geeignet ist, um die Feder (49) zum Sattelkörper (8) zu spannen, einen Abschnitt des Sattelkörpers (8) mittels einer Kupplung mit Spiel klemmend,
- wobei jeder der elastischen Äste (40, 44) einen Befestigungsabschnitt zu den Bremsklötzen (72) aufweist, um den Ast (40, 44) zu dem betreffenden Bremsklotz (16, 20) zu spannen,
- wobei der Kupplungsabschnitt zum Sattelkörper (52) zumindest ein Augloch (80) aufweist, das dazu geeignet ist, einen Führungs- und Tragstift (84) der Bremsklötze (16, 20) mittels einer Kupplung mit Spiel zu klemmen, **dadurch gekennzeichnet, dass** der Befestigungsabschnitt zu den Bremsklötzen (72) einen U-förmigen Abschnitt (88) aufweist, der in Bezug auf das Augloch (80) vorsteht und zur Verbindung mit einem seitlichen Rand (68) der Bremsklötze (16, 20) geeignet ist.

2. Drahtfeder (4) nach Anspruch 1, wobei der U-förmige Abschnitt ein weiteres Augloch (92) aufweist, das mit dem ersten Augloch (80) fluchtet, um für jeden der elastischen Äste (40, 44) zwei Verbindungspunkte mit dem Stift (84) zu erzeugen und um zwischen den zwei Auglöchern (80, 92) ein Gehäuse zu definieren, um einen seitlichen Rand (68) des Bremsklotzes (16, 20) aufzunehmen.

3. Drahtfeder (4) nach Anspruch 1 oder 2, worin das Augloch (40) hergestellt wird, indem ein Abschnitt von jedem elastischen Ast (40, 44) zu einem Ring aufgewickelt wird.

4. Drahtfeder (4) nach Anspruch 1, 2 oder 3, worin das Augloch (80) jeden elastischen Ast (40, 44) mit dem Verbindungsarm (48) verbindet, um einen Hebel zu erzeugen, der den mit dem Sattelkörper (8) verbundenen Verbindungsarm (48) mit den Bremsklötzen (16, 20) durch die elastischen Äste (40, 44) elastisch verbindet, wobei das Augloch (80) eine Hebelstütze des Hebels erzeugt.

## Revendications

1. Ressort en fil (4) pour un étrier (12) de frein à disque approprié pour être inséré à l'intérieur d'un corps d'étrier (8) d'un étrier (12) de frein à disque, le ressort (4) étant prévu pour être positionné à cheval sur le disque de frein correspondant et étant réalisé au moyen d'un fil métallique de forme appropriée, le ressort (4) comprend :
une première branche élastique (40) adaptée pour influencer élastiquement une première plaquette (16) positionnée en correspondance avec une première face d'une bande de frein d'un frein à disque correspondant,
la première branche élastique (40) influençant élastiquement la première plaquette (16) venant en butée contre un premier épaulement de réaction (32') du corps d'étrier (8) positionné en correspondance avec une extrémité latérale (28) d'un corps d'étrier (8),
une seconde branche élastique (44) appropriée pour influencer élastiquement une seconde plaquette (20) positionnée en correspondance avec une seconde face de la bande de frein, opposée à la première face dans une direction axiale (X-X) parallèle à l'axe de rotation du frein à disque correspondant, la seconde branche élastique (44) influençant élastiquement la seconde plaquette (20) venant en butée contre un second épaulement de réaction (32") du corps d'étrier (8), positionné en correspondance avec la même extrémité latérale (28) du corps d'étrier (8),
un bras de raccordement (48) entre la première et la seconde branche élastiques (40, 44), le bras de raccordement (48) s'interfaçant avec le corps d'étrier (8) créant un support et/ou un couplage du ressort (4) sur le corps d'étrier (8), dans lequel :
ledit ressort en fil (4) comprend au moins une section de couplage au corps d'étrier (52) appropriée pour retenir le ressort (4) sur le corps d'étrier (8), serrant une section du corps d'étrier (8) au moyen d'un couplage avec du jeu,
chacune des branches élastiques (40, 44) comprend une section de fixation aux plaquettes (72) afin de retenir ladite branche (40, 44) sur la plaquette (16, 20) correspondante,
dans lequel la section de couplage au corps d'étrier (52) comprend au moins un oeillet (80) approprié pour serrer une broche de guidage et de support (84) des plaquettes (16, 20) au moyen d'un couplage avec du jeu,
**caractérisé en ce que**:
la section de fixation aux plaquettes (72) comprend une section en forme de U (88), faisant saillie par rapport à l'oeillet (80) et appropriée pour se raccorder à un bord latéral (68) des plaquettes (16, 20).

2. Ressort en fil (4) selon la revendication 1, dans lequel ladite section en forme de U comprend en autre oeillet (92) aligné avec le premier oeillet (80) afin de créer pour chacune des branches élastiques (40, 44), deux points de raccordement à la broche (84) et pour définir, entre les deux oeillets (80, 92), un boîtier pour loger un bord latéral (68) de la plaquette (16, 20).

3. Ressort en fil (4) selon la revendication 1 ou 2, dans lequel ledit oeillet (80) est réalisé en enroulant sur un anneau, une section de chaque branche élastique (40, 44).

4. Ressort en fil (4) selon la revendication 1, 2 ou 3, dans lequel ledit oeillet (80) raccorde chaque branche élastique (40, 44) au bras de raccordement (48) afin de créer un levier qui raccorde élastiquement le bras de raccordement (48) raccordé au corps d'étrier (8), avec les plaquettes (16, 20) par le biais des branches élastiques (40, 44), l'oeillet (80) créant le point d'appui dudit levier.
